# EUROPEAN PATENT APPLICATION

(11) **EP 4 714 639 A1**
(43) Date of publication of application: **25.03.2026**
(21) Application number: 25200291.0
(22) Date of filing: 04.09.2025
(51) Int. Cl.: B29C 70/08, B29C 70/86, B29D 99/00

(54) **METHOD FOR PRODUCING A COMPOUND OBJECT VIA HOT MOLDING**

(30) Priority: 19.09.2024 IT 202400020962
(71) Applicant: Alia Mentis S.r.l., 31050 Vedelago TV (IT)
(72) Inventor: Paronetto, Giuseppe, 31050 Vedelago (TV) (IT); Tessaro, Luca, 31050 VEDELAGO (IT)
(74) Representative: Citron, Massimiliano

(57) **Abstract**

A method is described for producing a composite object (10) by hot molding, with the steps of
- providing a first solid core (14) molded with expanded cellular material,
- depositing a first lamination (16) of resin-impregnated hardening material over the external surface of the first core, where the first lamination comprises a first portion (20) and a second portion (22) which is an extension of the first portion;
- applying a filler material, distinct from the first core (14) , only on the external surface of the second portion;
- depositing a second lamination of resin-impregnated hardening material to envelope the assembly given by the first core, the filler material and the first lamination,
so that, once the laminations have been completed, in the molded object
the filler material ends up placed between the internal surface of the second lamination and said external surface, and
the first portion is in contact with said internal surface;

- solidifying by curing in a mold the laminations so that
the second lamination creates a rigid outer shell (12) of the object that envelops the first lamination, the first core and the filler material, and
the first lamination creates an internal reinforcement of the object.

## Description

The invention relates to a method for producing a composite object through hot molding, and to the object thus produced. The object is formed of an outer shell made of a hardening material such as carbon, fiberglass, or another fiber-resin composite, and an internal core made of cellular material.

For example from EP 23182940, molded carbon composite objects are known that have one or more internal cores made of expanded material.

To increase the object's structural strength, internal carbon walls are created that function as stiffening ribs or centerings. For example, the object's internal cores made of expanded cellular material are wrapped in carbon.

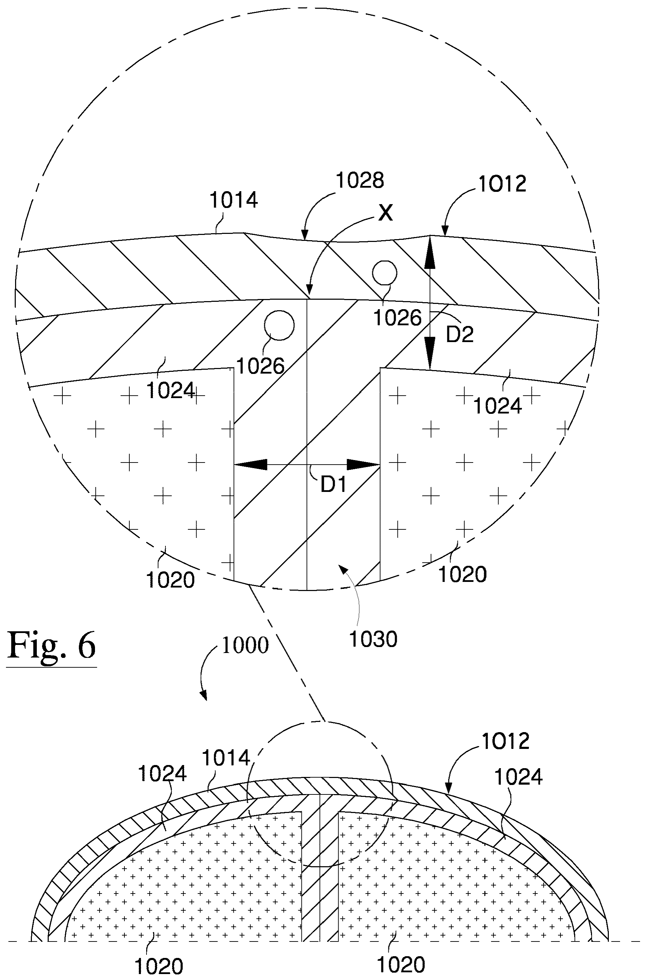

A general problem is that the carbon layers arranged around the cores become the seat of structural defects, particularly due to suction or stretching of the resin impregnating the carbon sheets. This can cause cavities and/or depressions to form on the external surface of the molded object (see, for example, 1026 and 1028 in Fig. 6 attached here). The former weaken the rigidity of the object, the latter create unwanted surface defects (not just aesthetic ones).

The main object of the invention is a method and an object that mitigates or solves the above problem.

Another object of the invention is a method and an object that improves the structural quality of a composite object.

One aspect of the invention relates to a method for producing a composite object by hot molding, with the steps of
- providing a first solid core molded with expanded cellular material;
- depositing a first lamination of hardening material and resin over the external surface of the first core, wherein the first lamination comprises:
   a first portion and
   a second portion which is an extension of the first portion;
- applying a filler material, distinct from the first core, only on the external surface of the second portion;
- depositing a second lamination of hardening material and resin to envelope the assembly given by the first core, the filler material and the first lamination;
   so that, once the laminations are completed, in the molded object
   the filler material is placed between the internal surface of the second lamination (the one facing the first core) and said external surface (which faces said internal surface), and
   the first portion is in contact with said internal surface;
- solidifying the laminations by curing in the mold so that
   the second lamination creates a rigid outer shell of the object that envelops the first lamination, the first core and the filler material, and
   the first lamination creates an internal reinforcement of the object.

In this way, the filler material not only acts as a mechanical support between the shell and the first lamination, avoiding deformations, but also serves to fill a critical residual volume that could deform during curing in the mold between the two laminations.

Another aspect of the invention relates to a composite object comprising:
- an outermost external hard shell that
   is made up of a lamination of hardening material impregnated with resin, the lamination being solidified by curing in a mold, and
   determines the external surface of the object;
- a first internal core made of expanded cellular material which is enveloped by the shell;
- a lamination internal to the shell that
   is made of hardening material impregnated with resin,
   solidified by curing in a mold, and
   is placed between the internal surface of the shell and the external surface of the first core, and
   comprises:
      a first portion adhering to the internal surface of the shell, and
      a second portion that
         is an extension of the first portion and
         is detached from the inner surface of the shell, and
- a second core which is separate from the first core and placed between the internal surface of the shell and the surface of the second portion which faces the internal surface of the shell.

Preferably, the first and second portions extend on respective inclined planes to increase the stiffness of the internal lamination, and preferably the second portion converges towards the inside of the object (and/or towards the first core) to form a stronger internal rib in the object.

In a preferred variant of the method
the first lamination comprises the series of a first, second, third and fourth part;
the filler material is applied only on the external surface of the second and third part, and
the second lamination is deposited so that
   the filler material ends up placed between the internal surface of the second lamination and the external surface of the second and third part (the one facing the second lamination), and
   the first and fourth parts are in contact with said internal surface,
the second and third part forming, with respect to the internal surface of the second lamination, a channel inside the object whose width extends between the second and third part and whose volume is delimited by the second and third part and by the internal surface of the second lamination,
the filler material filling the volume of the channel.

In the final composite object, the channel walls advantageously form a stiffening rib that extends, for example linearly, under the second lamination. The rib opposes deformations of the second lamination, and of the object in general.

In particular, the second and third parts are deposited to form a U- or C- or V- or Q- or horseshoe-shaped profile in cross-section.

In particular, the first, second, third and fourth parts are deposited so that the first lamination forms a U- or C- or V- or Q- or horseshoe-shaped profile in cross-section.

In a more preferred variant of the method,
on diametrically opposite sides of the first core two first laminations as defined above are deposited,
so that the channels of the first two laminations have concavities facing in substantially opposite directions, or have convexities facing substantially towards each other, more preferably aligned.

More preferably, said convexities have a respective apex and the first two laminations are placed on the first core so that the distance between the two apices is non-zero and minimal.

Even more preferably, the first two laminations are placed so that the two apices touch each other.

In this way the two channels (or apices) rest on each other and also oppose to a compression of the object directed along a line of action that passes through the apices (and the centre of the two channels).

In a preferred variant of the method:
the first core is formed by the juxtaposition of at least two first cores, and
   - at least one of the first two cores is covered, partially or completely, with the second lamination, and
   - the filler material is placed on the surface of the second portion which will face said internal surface,
so that, once the laminations are completed, in the final molded object
   the first portion ends up adherent to the internal surface of the second lamination, and
   the second portion is detached from said internal surface and
   converges towards the inside of the object (and/or towards the first core), and
   the filler material is located between the surface of the second portion and said internal surface.

In a preferred variant of the method the first core is formed of the juxtaposition of two first cores, and
- the first two cores are covered, partially and completely, with a lamination as said second lamination and so that the lamination on each of the first cores comprises
   a first portion and
   a second portion that
      is an extension of the first portion
      and converges towards the inside of the object (and/or towards the first core); and
- the two first laminations are arranged so that the respective second portions on the two first cores touch each other at least along a contact line, or preferably along a contact plane, and
- the filler material is placed on the second portions of the first laminations,
   so that, once the laminations are completed, in the final molded object
   with respect to said internal surface a channel is formed whose width extends between the second portions of each first lamination and whose volume is delimited by the second portions of the first laminations and said internal surface,
   the filler material filling the volume of the channel and resulting between said internal surface and the surfaces of the second portions which are facing said internal surface.

In a preferred variant the first lamination comprises:
a first part as said first portion;
a second part as said second portion;
a third part as said second portion; and
a fourth part as said first portion, wherein
the second and third parts are an extension of each other and form, with respect to the internal surface of the second lamination, a channel whose width extends between the second and third parts and whose volume is delimited by the second and third parts and the said internal surface,
the filler material filling the volume of the channel.

In particular, the second and third parts form a U- or C- or V- or Q- or horseshoe-shaped profile in cross-section.

In particular, the second and third parts form a concavity in cross-section facing the said internal surface.

In particular, the first, second, third and fourth parts are configured so that the first lamination forms a U- or C- or V- or Q- or horseshoe-shaped profile in cross-section.

In a more preferred variant, the object comprises two first laminations such as the first lamination defined above, wherein the two first laminations are placed on diametrically opposite sides of the first core.

Preferably the channels of the first two laminations, or the first laminations, form concavities facing substantially opposite directions, or have convexities facing substantially towards each other, preferably aligned.

More preferably, said convexities have a respective apex and the first two laminations are configured so that the distance between the apices is non-zero and minimal.

Even more preferably the first two laminations are configured so that the two apices touch each other.

In a preferred variant the object comprises two cores juxtaposed to form said first core, wherein
at least one of the two cores is covered, partially or completely, by the first lamination, wherein the first portion of the first lamination is adherent to said internal surface, and the second portion
   is detached from the said internal surface, and
   converges towards the inside of the object (and/or towards the first core),
the filler material being placed between said internal surface and the surface of the second portion which faces said internal surface.

In a preferred variant the object comprises:
two cores juxtaposed to form the first core, wherein
the two cores are covered, partially and completely, by respective first laminations made as said first lamination,
   and in each of the first laminations
      the first portion is adherent to said internal surface, and
      the second portion
         is an extension of the first portion,
         is detached from said internal surface, and
         converges towards the inside of the object (and/or towards the first core);
   wherein the second portions of the first laminations touch each other at least along a contact line, or preferably along a contact plane, to form,
   with respect to said internal surface, a channel whose width extends between the second portions of the first laminations and whose volume is delimited by the second portions and by said internal surface;
   the filler material filling the volume of the channel and being placed between said internal surface and the surfaces of the second portions which are facing said internal surface.

For the method and the object, below are some preferred embodiments:
in particular, the first lamination forms a U- or C- or V- or Q- or horseshoe-shaped profile in cross-section;
in particular, the first lamination forms a concavity facing said internal surface;

The first lamination may consist of N layers of hardening material and resin, N >= 1.

The second lamination may consist of M layers of hardening material and resin, M >= 1.

In a preferred variant the filler material is the same material as the first core, but not necessarily.

In a preferred variant, the first core and/or one or each of the cores and/or said component is made by molding, preferably by molding a material, e.g. a powdered, granular, or expanded cellular material. For the powdered, granular, or expanded cellular material of one or each core, a cellular expanded material composed of expanded and unexpanded particles is preferably used, e.g. the core being composed by weight of 20-50% expanded particles (microspheres) and 80-50% unexpanded particles (microspheres). The expanded cellular material solidifies upon heating in the mold. Once solidified, it can re-expand if its temperature exceeds a threshold.

In one variant, said filler material is made as a solid molded core, and applied to the second portion as a solid molded core.

In another variant, the filler material is a powdered material used to create a core through hot molding, similar to the second core, and is applied to the second portion as a powdered material.

The powdered material solidifies during the mold curing (crosslinking) of the first and second laminations.

Preferably the first core comprises, and/or is molded to comprise, a groove or depression or trench to accommodate the second portion of the first lamination.

In a preferred variant, the N layers and/or the M layers are carbon layers; in this case, the outermost layer of the M layers forming the coating layer of one inner core touches the outermost layer of the M layers forming the coating layer of another inner core at a point, line, or surface between the two inner cores.

The aforementioned object may in turn form an internal component of another object.

Preferably said channel and/or said second core has a triangular cross-section or a cross-section of a hyperbolic or cuneiform triangle or of a triangoloid;
and/or
the second core has the shape of a prism, for example a right one, with a triangular base or with a base of a triangoloid or of a hyperbolic triangle,
said second core has the shape of a bead with a triangular cross-section or with a cross-section of triangoloid or hyperbolic triangle.

Preferably in the first variant said channel and/or said second core has a cross-section having three sides:
a substantially straight side defined by a portion of the internal surface of the shell or first lamination;
a straight or curved side defined by said second portion; and
a straight or curved side defined by the boundary with the first core.

Preferably in the second and third variants, said channel (and/or said second core) has a cross-section having three sides:
a substantially straight side defined by a portion of the internal surface of the shell or first lamination;
a straight or curved side defined by the second part; and
a straight or curved side defined by the third part.

Preferably in the fourth variant said channel (and/or said second core) has a cross-section having three sides:
a substantially straight side defined by a portion of the internal surface of the shell or first lamination;
a straight or curved side defined by the second portion; and
a straight or curved side defined by the border with the first core.

Preferably in the fifth variant said channel (and/or said second core) has a cross-section having three sides:
a substantially straight side defined by a portion of the internal surface of the shell or first lamination;
a straight or curved side defined by the second portion of lamination applied to an internal core as the first core; and
a straight or curved side defined by the second portion of lamination portion applied to another internal core as the first core.

Preferably, the second core is an elongated tubular body, especially a thread-like body. More specifically, the second core has a substantially linear longitudinal development and/or is concentrated around an axis (straight or curved).

In particular, the method is suitable for producing, and/or the object is, a padel racket, a propeller blade, a missile or aircraft fin, or a fin for a surfboard or boat.

The advantages of the invention will be further clarified by preferred embodiments described below with reference to the accompanying drawings, wherein:
- Figure 1 shows a schematic cross-section of a first object according to the invention;
- Figure 2 shows a schematic cross-section of a second object according to the invention;
- Figure 3 shows a schematic cross-section of a third object according to the invention;
- Figure 4 shows a schematic cross-section of a fourth object according to the invention;
- Figure 5 shows a schematic cross-section of a fifth object according to the invention;
- Figure 6 shows a schematic cross-section of a known object;
- Figure 7 shows a schematic cross-section of a sixth object according to the invention.

In the figures, identical references indicate identical or similar parts. To avoid crowding the drawings, some elements are not indicated repeatedly.

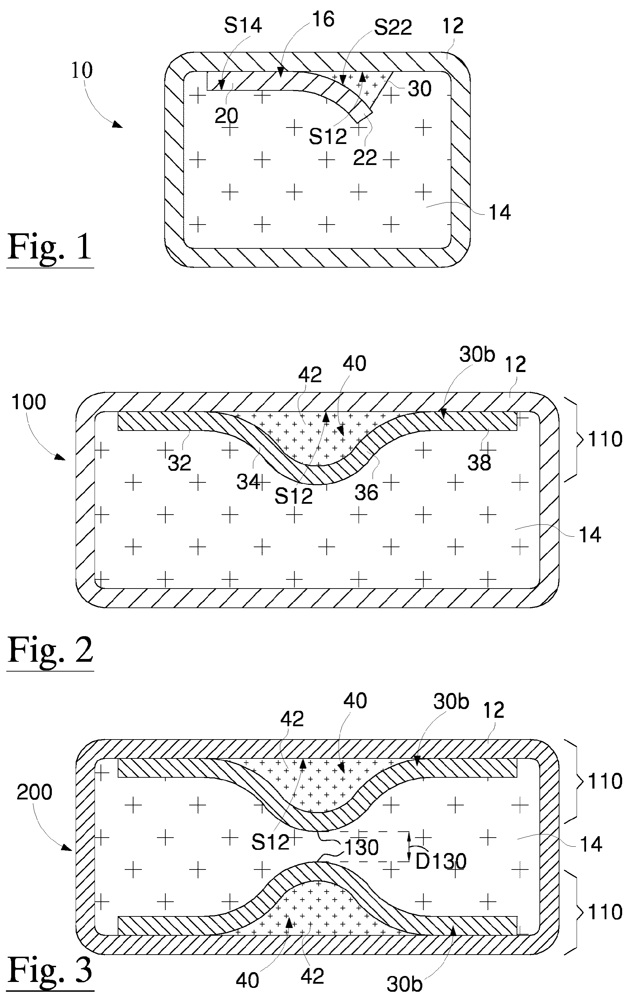

Fig. 1 shows a general embodiment for a composite object 10 comprising an outermost rigid shell 12, made of a carbon lamination and determining the outer surface of the object 10, and an inner core 14 made of expanded cellular material and enveloped by the shell 12.

Between the internal surface S12 of the shell 12 and the external surface S14 of the core 14 is a rigid carbon lamination or layer 16. The layer 16 comprises a first portion 20 adhering to the internal surface S12 and a second portion 22 which is an extension of the first portion 20. The second portion 22 is detached from the internal surface S12 and converges towards the inside of the object 10 (and the core 14). By construction, the second portion 22 has a surface S22 facing the surface S12.

To produce the composite object operatively first the lamination 16 is laminated on the core 14, and then the whole is enveloped with an external carbon lamination which, after curing in the mold, will form the rigid shell 12. The surface of the core 14 has a groove to accommodate the portion 22.

After the object 10 has been cured in the mold, an empty zone between the second portion 22 and the surface S12 would be a source of structural defects because the core 14 is unable to support the shell 12 at that point nor to copy the wedge-shaped volume between the second portion 22 and the surface S12.

Molding and handling limitations during production prevent the core 14 from having sharp and/or thin edges, or simultaneously small and precise structural details. Furthermore, laminating the carbon on the core 14 is a highly stressful operation and can damage the smallest details of the core 14.

To solve the problem, before curing and depositing the external lamination 12, a second core 30, separate from the first core 14, is applied to the surface S22. The core 30 will end up between the surface S12 and the surface S22 after the external lamination relating to the shell 12 is laid.

The second core 30 during and after curing functions as a mechanical support for the lamination of the shell 12, and adequately fills the critical volume between the surface S12 and the surface S22 opposing any sagging or bending of the lamination of the shell 12 during curing.

In the molded object 10, the lamination 16 serves as a structural reinforcement for the object 10. In particular, the second portion 22, when solid, forms a blade inside the object 10 which strengthens it against bending (the blade extends inside the object perpendicular to the sheet of the drawings).

Advantageously, the function of the core 30 does not require high dimensional accuracy for the core 30. The presence of the core 30 is sufficient to mitigate, and often eliminate, any surface defects of the shell 12 in the final object 10.

In a first preferred variant (fig. 2) an object 100 comprises an internal carbon lamination 30b, functionally analogous to the lamination 16, formed of the series of
a first part 32 as the portion 20,
a second part 34 as the portion 22,
a third part 36 as the portion 22, and
a fourth part as the portion 20.

Each part 32, 34, 36, 38 is the extension of another and together the parts 32, 34, 36 and 38 delimit, with respect to the surface S12, a channel 40 whose width is determined by the parts 34, 36 and whose volume is delimited by the parts 34, 36 and by the surface S12.

In particular, the parts 34, 36 form a U- or C- or V- or Q- or horseshoe-shaped profile in cross-section.

A second core 42 fills the volume of the channel 40 up to the surface S12, with the same effects and advantages as the core 30 (it prevents the collapse of the shell 12 over the channel 40).

The core 14 in turn comprises a surface convexity to house at least the parts 34, 36 and the core 42 in a complementary manner.

The solidified parts 34, 36 constitute carbon walls of the channel 40, which results filled with the core 42. Such walls in the molded object 100 constitute a longitudinal stiffening rib or structure 110 which extends, e.g. linearly, under and integrally with the shell 12 (perpendicular to the drawing sheet). The rib opposes deformations of the shell 12 and reinforces the object 100.

An even more preferred variant (fig. 3) increases the resistance of the object. For this purpose, an object 200 comprises two structures 110 as described above.

The two structures 110 are placed on diametrically opposite sides of the object 200. The channels 40 of the two structures 110 have concavities facing substantially opposite directions, or have convexities facing substantially towards each other, preferably aligned.

More preferably, said convexities have a respective apex 130 and the two structures 110 are positioned so that the distance D130 between the two apices 130 is a positive value and equal to the non-zero distance of two parallel planes passing through each apex 130 respectively.

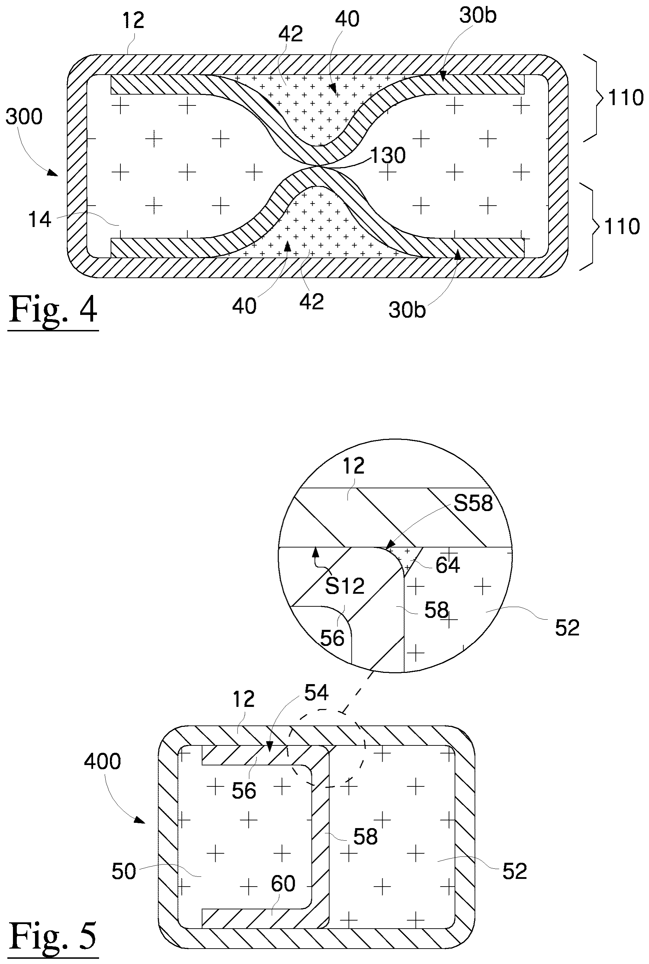

Even more preferably (fig. 4, object 300) the two structures 110 are positioned so that the two apices 130 touch each other. In this way the two channels 40 rest on each other (D130 = 0) and also resist compression of the object 300 directed along a line of action that passes through the apices 130 (and/or the center of the two channels 40).

In fig. 3 and 4 the structures 110 may also have different overall dimensions and/or channels 40 with different dimensions within the same object.

Another preferred variant (fig. 5) is illustrated by an object 400. Here the first internal core 14 is made up by the juxtaposition of at least two internal cores 50, 52.

At least one of the two cores 50, 52 (the 50 in the drawing) is covered, partially or completely, by a covering lamination 54 made like the lamination 16.

The lamination 54 comprises at least
a first portion 56 adhering to the surface S12, and
a second portion 58 which
   is an extension of the portion 56,
   is detached from the surface S12, and
   converges towards the inside of the object 400.
In particular, the portion 58 joins with a portion 60 of the lamination 54 which is analogous to the portion 56 for the opposite side of the shell 12.

The portion 58 has by construction a surface S58 facing the surface S12.

A core 64 is placed between the surface S12 and the surface S58, with the same function as the core 30. For this purpose, the core 52 is chamfered to obtain a volume for the core 64.

In a more preferred variant, also the joining between the portion 60 and the portion 58 is provided with a core 64, mirroring the portion 56.

From EP4309882 molded carbon composite objects are known that have internally one or more cores made of expanded material. Fig. 6 shows as an example a simplified cross-section of a well-known object 1000.

The object 1000 contains cores 1020 made of expanded cellular material, each of which is completely covered with reinforcing carbon laminations. The assembly of the covered cores 1020 is then completely covered with further carbon laminations 1014.

At the end of the molding process, the object 1000 has an external surface 1012 created by a continuous solid carbon shell 1014. Internally, the shell 1014 contains the cores 1020, completely covered by respective solid carbon shells 1024.

Overall, the shells 1024 and 1014 are bonded together and form an internal framework for the object 1000, giving it strength, while the cores 1020 ensure its lightness. The same applies to the objects 100, 200, 300, and 400.

The attached walls of two shells 1024 form between two cores 1020 a wall 1030 inside the object 10 which has a total thickness D1.

The walls of two shells 1024 attached to the shell 1014 form the total thickness D2 of the shell 1014, understood as the thickness from the profile of a core 1020 to the outer surface 1012.

By geometry these structures have at least one zone X where each of the three shells 1024, 1014 is simultaneously maximally close to the other two.

One problem is that the X zone becomes the seat of structural defects, of which the enlargement in Fig. 6 shows some examples, if the thickness D1 or D2 increases.

The zone X contains such a mass of resin that, at the end of the molding, sucks or stretches the surrounding area. Cavities 1026 and/or depressions 1028 may then form on the external surface. The former weaken the rigidity of the object 1000, the latter create unwanted surface defects (not just aesthetic ones). The same applies to the objects 100, 200, 300, and 400.

A phenomenon like the X-zone is also present in the area affected by the core 64.

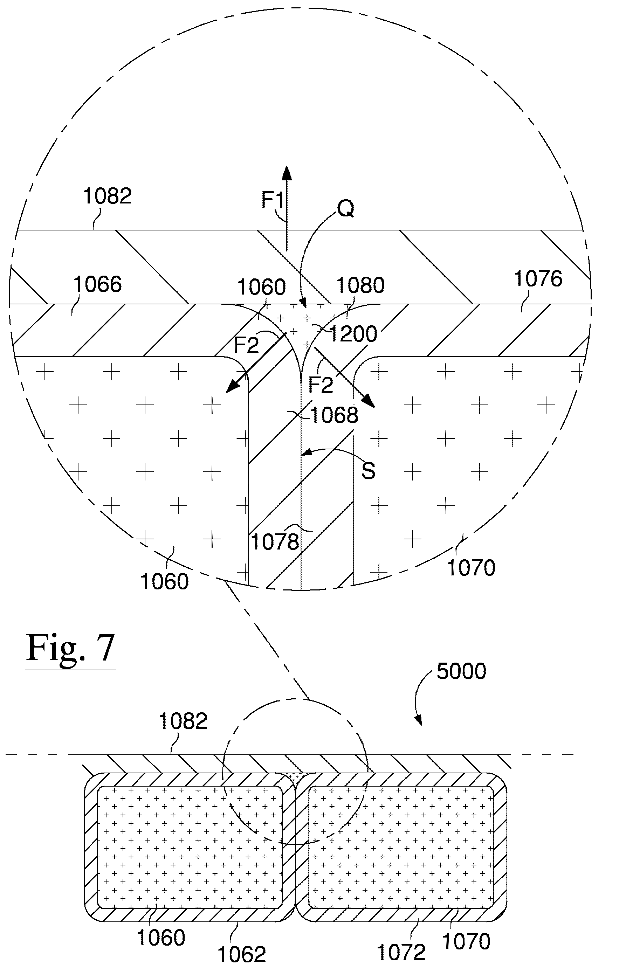

To solve the problem, an object 5000 (fig. 7) contains at least two cores 60, 70 made of expanded cellular material, each of which is covered by carbon laminations.

The core 60 is covered, preferably completely, by a carbon lamination 62, e.g. M >= 1 resin-impregnated carbon sheets.

The core 70 is covered, preferably completely, by a carbon lamination 72, e.g. P >= 1 resin-impregnated carbon sheets.

The cores 60, 70 thus covered are placed in the mold side by side so that the outer surface of the lamination 62 touches the outermost surface of the lamination 72 at a point or surface S located between the core 60 and the core 70.

The assembly of the cores 60, 70 is then completely covered by another carbon lamination 82, e.g. one or more sheets of resin-impregnated carbon.

In fig. 7 for the laminations 62, 72, 82 only one layer or sheet of carbon is drawn, for simplicity.

By construction, the lamination 62 has an outer surface that comprises a portion 66 in contact with the inner surface of the lamination 82; and the lamination 72 has an outer surface that comprises a portion 76 in contact with the inner surface of the lamination 82.

The portion 66 and the portion 76 extend, locally, following the profile of the lamination 82, i.e. they extend parallel to the lamination 82.

To follow the profile of the core 60, the external surface of the lamination 62 also comprises a portion 68 which, by joining with the portion 66 and by a change of direction, extends approximately orthogonally to the portion 66 and to the lamination 82.
Otherwise, or in combination, to follow the profile of the core 70 the external surface of the lamination 72 also comprises a portion 78 which, by joining with the portion 76 and by a change of direction, extends approximately orthogonally to the portion 76 and to the lamination 82.

The orthogonality between the portions 68, 78 and the portions 66, 76 is not necessary; the change of direction and the divergence of the portions 68, 78 from the lamination 82 towards the inside of the object 50, is sufficient.

The portions 66, 68, 76, 78 are preferably flat, but they can also be curved, i.e. concave. This depends on the shape of the core 60, 70.

By construction it is obtained that
- between the portions 66, 68 there is a portion 1060 which joins the portions 66, 68;
- between the portions 76, 78 there is a portion 1080 which joins the portions 76, 78;
- the internal surface of the lamination 82 extends between the portions 66, 76 and forms a sort of bridge between them;
- the curved portions 1060, 1080 diverge from the innermost layer of the lamination 82 making a change of direction towards the inside of the object 50 to join the portions 66, 76 to the portions 68, 88.

The portions 1060, 1080 may be flat or curved.

From all this it follows that at least between the internal surface of the lamination 82 and the portions 106, 108 there remains a volume or channel Q which is not occupied by a carbon sheet. In the example the volume or channel Q has a cross-section in the shape of a triangle or triangoloid.

The volume or channel Q is filled with expanded cellular material, preferably the same as the cores 60, 70, before applying the lamination 82.

At the end of the molding process, the object 5000 has an external surface 52 consisting of an uninterrupted solid carbon shell 54 created by the solidification of the laminations, while internally the shell 54 contains the cores 60, 70 completely covered by respective solid carbon shells 64, 74 created by the solidification of the laminations 62, 72.

In the volume Q a third internal core 110 made of expanded cellular material is created.

The core 110 in that particular position has notable advantages. Not only does it prevent the laminations 62, 72 from enveloping the cores 60, 70 with curvature radii that are too small, but it also empties the zone X of fig. 1 (coinciding with the volume or channel Q) from resin material. Therefore, the volume in which the defects described in fig. 1 can appear, is smaller.

Furthermore, the expansion of the material constituting the core 110 during curing in the mold improves the shape matching between the carbon layers and the cores 60, 70.

In particular, the expansion of the material constituting the core 110
pushes (see arrow F1) the lamination 82 towards the outside of the object 50, preventing depressions 1028, and
pushes (see arrow F2) at least the portions 1060, 1080 towards the inside of the object 50 preventing cavities 1026 or detachments between the laminations 62, 72 and the cores 60, 70.

It is preferable to make a core 1200 in each volume of the object 50 where the geometry of the laminations 62, 72 and the lamination 82 induces a volume Q. Or it is preferable to increase the curvature radii of the cross-sections of the cores 60, 70 to create a volume Q of appreciable dimensions.

An object may also have a multiplicity of laminations 16, structures 110, laminations 54 or laminations 66, 76, 68, 78 distributed throughout its internal volume.

In the structures of Figs. 1-5 and 7, only one carbon layer has been drawn and described for each lamination, but it is understood that each of the elements 12, 16, 30b, 54, 58, 60 may in reality be a multiple lamination of superimposed layers. In this case, by the term layer or lamination the relative assembly should be understood.

In the drawing, the various laminations are graphically differentiated for ease of understanding, but in the final object they are a homogeneous and bonded as a whole.

The core 30, 42, 64 is molded separately and then applied as a solid body to the respective laminations of the objects described above before curing them in the mold. It is also possible to fill the volume occupied by the core 30, 42, 64 with powdered cellular material and obtain the solidification of the core 30, 42, 64 during the curing of the laminations described above (as described for the core 1200). Alternatively, the core 1200 too may be molded separately and then applied as a solid body to the respective laminations.

The expansion of the material, powdered or not, of the core 30, 42, 64 or 1200 during the curing in the mold is advantageous for the effects described for the core 1200.

## Claims

1. Method for producing a composite object by hot molding, with the steps of
- providing a first solid core molded with expanded cellular material,
- depositing a first lamination of resin-impregnated hardening material over the external surface of the first core, where the first lamination comprises:
a first portion and
a second portion which is an extension of the first portion;
- applying a filler material, distinct from the first core, only on the external surface of the second portion;
- depositing a second lamination of resin-impregnated hardening material to envelope the assembly given by the first core, the filler material and the first lamination,
so that, once the laminations have been completed, in the molded object
the filler material ends up placed between the internal surface of the second lamination and said external surface, and
the first portion is in contact with said internal surface;
- solidifying by curing in a mold the laminations so that
the second lamination creates a rigid outer shell of the object that envelops the first lamination, the first core and the filler material, and
the first lamination creates an internal reinforcement of the object.

2. Method according to claim 1, wherein the first lamination forms a U- or C- or V- or Ω- or horseshoe-shaped profile in cross-section.

3. Method according to claim 1 or 2, wherein said filler material is made as a molded solid core, and applied on the second portion as a molded solid core.

4. Method according to claim 1 or 2, wherein said filler material is powdered material for producing by hot molding a core as said second core, and is applied to the second portion as a powdered material.

5. Method according to any preceding claim, wherein the first core comprises, and/or is molded so as to comprise, a groove or depression or furrow for housing the second portion of the first lamination.

6. Method according to any preceding claim, wherein the first lamination comprises the series of a first, second, third and fourth part; and
- the filler material is applied only to the external surface of the second and third part, and
- the second lamination is deposited so that
the filler material ends up located between the internal surface of the second lamination and the external surface of the second and third part, and
the first and fourth part are in contact with said internal surface;
the second and third part forming, with respect to the internal surface of the second lamination, a channel internal to the object whose width extends between the second and third part and whose volume is delimited by the second and third part and the internal surface of the second lamination,
so that the filler material fills the volume of the channel.

7. Method according to claim 6, wherein the second and third part are deposited to form a U- or C- or V- or Ω- or horseshoe-shaped profile in cross-section.

8. Method according to any preceding claim, wherein on diametrically opposite sides of the first core two first laminations as defined above are deposited,
so that the channels of the two first laminations have concavities facing substantially opposite directions.

9. Method according to any preceding claim, wherein the two first laminations have respective apices and are positioned so that the two apices touch each other.

10. Method according to any preceding claim, wherein
the first core is formed by the juxtaposition of at least two first cores, and
- at least one of the two first cores is covered, partially or completely, with the second lamination, and
- the filler material is placed on the surface of the second portion that will face said internal surface,
so that, once the laminations are completed, in the final molded object
the first portion ends up adherent to the internal surface of the second lamination, and
the second portion is detached from said internal surface and converges towards the inside of the object, and
the filler material is located between the surface of the second portion and said internal surface.
